# EUROPÄISCHE PATENTANMELDUNG

(11) **EP 1 163 856 A2**
(43) Veröffentlichungstag der Anmeldung: **19.12.2001**
(21) Anmeldenummer: 01113494.7
(22) Anmeldetag: 02.06.2001
(51) Int. Cl.: A24C 5/60

(54) **Perforationsvorrichtung**

(30) Priorität: 15.06.2000 DE 10028846
(71) Anmelder: Hauni Maschinenbau AG, 21033 Hamburg (DE)
(72) Erfinder: Dombek, Manfred, 21521 Dassendorf (DE)
(74) Vertreter: Eisenführ, Speiser & Partner

(57) **Zusammenfassung**

Die Erfindung betrifft eine Vorrichtung zum Herstellen von Öffnungen in einer Umfangsoberfläche eines im wesentlichen länglichen, zylinderförmigen Gegenstandes, insbesondere einer Zigarette, mit einer Strahlungsquelle zum Erzeugen energiereicher Strahlung, mit deren Hilfe die Öffnungen in den Gegenstand einbringbar sind, mit einer Wirkzone, innerhalb derer die Strahlung zum Einbringen der Öffnungen auf einen sich durch die Wirkzone bewegenden Gegenstand einwirkt, mit einem Rollkanal zum Erzeugen einer Eigenrotationsbewegung des Gegenstandes um seine Längsachse während der Gegenstand sich durch die Wirkzone bewegt, um die Umfangsoberfläche des Gegenstandes der Strahlung auszusetzen, mit Transportmitteln zum Befördern des Gegenstandes durch die Wirkzone. Die Erfindung zeichnet sich dadurch aus, daß der Rollkanal aus einem eine Rollfläche bildenden Rollband und einem zugeordneten, eine Gegenrollfläche bildenden, stationären Rollklotz gebildet ist, wobei das Rollband zumindest teilweise innerhalb einer den Gegenstand an den Rollkanal an- und von diesem abfördernden Fördertrommel geführt ist, um den Gegenstand von dieser zu übernehmen.

## Beschreibung

Die Erfindung betrifft eine Perforationsvorrichtung zum Herstellen von Öffnungen in einer Umfangsoberfläche eines im wesentlichen länglichen, zylinderförmigen Gegenstandes, insbesondere einer Zigarette, mit einer Strahlungsquelle zum Erzeugen energiereicher Strahlung, mit deren Hilfe die Öffnungen in den Gegenstand einbringbar sind, mit einer Wirkzone, innerhalb derer die Strahlung zum Einbringen der Öffnungen auf einen sich durch die Wirkzone bewegenden Gegenstand einwirkt, mit einem Rollkanal zum Erzeugen einer Eigenrotationsbewegung des Gegenstandes um seine Längsachse während der Gegenstand sich durch die Wirkzone bewegt, um die Umfangsoberfläche des Gegenstandes der Strahlung auszusetzen, und mit Transportmitteln zum Befördern des Gegenstandes durch die Wirkzone.

Derartige Verfahren und Vorrichtungen sind aus dem Stand der Technik bekannt. Bspw. zeigt die DE 27 51 522 (entspricht der US 4,281,670) der Anmelderin eine solche Perforationsvorrichtung. Bei dieser Perforationsvorrichtung werden die Zigaretten zwischen einer Rolltrommel und einem sogenannten Rollklotz zur Eigenrotation gebracht. Während dieser Eigenrotation werden die Zigaretten von einem Laserstrahl perforiert. Da sich die Zigaretten während ihrer Rollung zwischen der Rolltrommel und dem Rollklotz in dem so gebildeten Rollkanal relativ zu dem Laser fortbewegen, wird der Laserstrahl der in dem Rollkanal laufenden Zigarette nachgeführt.

Aufgabe der vorliegenden Erfindung istes, eine verbesserte Perforationsvorrichtung zur Verfügung zu stellen, insbesondere zu gewährleisten, daß die auf die Gegenstände während der Perforation einwirkenden Kräfte, insbesondere Kräfte durch die Rollmittel, so niedrig wie möglich gehalten werden.

Die vorstehende Aufgabe wird bei einer Perforationsvorrichtung der eingangs genannten Art erfindungsgemäß durch den Gegenstand des Anspruches 1 gelöst.

Ein Vorteil der Erfindung liegt in der Möglichkeit, die Zigarette einmal vollumfänglich zu rollen, während sie sich in der Wirkzone befindet. So muß die Zigarette nicht - wie im Stand der Technik - vollständig durchbohrt werden. Ein weiterer Vorteil liegt in der Integration von Rollband und Fördertrommel, da somit platzsparend gebaut werden kann und gleichzeitig ein schonender Übergang der Zigaretten von dem Transport in die Rollung gewährleistet wird.

Besonders die Übernahme der Zigarette durch das Rollband von der Fördertrommel, wobei das Rollband von innerhalb der Fördertrommel heraus die Zigarette radial aus der entsprechenden Fördermulde heraushebt, gewährleistet einen schonenden Beginn der Rollbewegung der Zigarette.

Bevorzugt ist das Rollband um mindestens zwei innerhalb der Fördertrommel stationär, bevorzugt in Nuten der Fördertrommel gelagerte Umlenkrollen geführt. Dabei werden bevorzugt für jede Wirkzone jeweils zwei Umlenkrollen verwendet, um das Rollband vor jeder Wirkzone definiert durch die entsprechende Umlenkrolle in den Förderweg der Zigaretten zu leiten, bzw. definiert durch die entsprechende Umlenkrolle das Rollband wieder weiter in das Innere der Fördertrommel zurückzuführen, um die entsprechende Zigarette wieder an die Fördertrommel schonend übergeben zu können.

Bei einer weiteren vorteilhaften Ausführungsform sind mit Hilfe eines Rollbandes und zwei verschiedener Rollklötze zwei Rollkanäle mit entsprechenden Wirkzonen gebildet, die in Förderrichtung der Fördertrommel hintereinander im Förderweg der Gegenstände liegen, so daß benachbarte Gegenstände in verschiedenen Wirkzonen perforiert werden können. Bei einer solchen Ausführung kann der Abstand der Gegenstände auf der Fördertrommel außerhalb des Rollkanals kleiner als der Umfang der Gegenstände gewählt werden.

Weitere bevorzugte Ausführungsformen der erfindungsgemäßen Vorrichtung bzw. des erfindungsgemäßen Verfahrens sind in den Unteransprüchen angegeben.

Die Erfindung wird nun anhand von Ausführungsbeispielen in der Zeichnung erläutert. Die Zeichnung zeigt:
- Fig. 1: eine schematische Seitenansicht einer ersten Ausführungsform einer Perforationsvorrichtung;
- Fig. 2: eine schematische Seitenansicht einer zweiten Ausführungsform der Perforationsvorrichtung;
- Fig. 3: ein die Umgebung des Rollkanals zeigender, vergrößerter Ausschnitt der Fig. 1; und
- Fig. 4: den Ausschnitt gemäß Fig. 3 bei einer weiteren Ausführungsform der Perforationsvorrichtung, und
- Fig. 5: einen Schnitt entlang der Linie A-A der Fig. 3.
- Fig. 6: eine schematische Seitenansicht einer vierten Ausführungsform der Perforationsvorrichtung;
- Fig. 7: eine schematische Seitenansicht einer fünften Ausführungsform der Perforationsvorrichtung;
- Fig. 8: eine schematische Seitenansicht einer sechsten Ausführungsform der Perforationsvorrichtung.

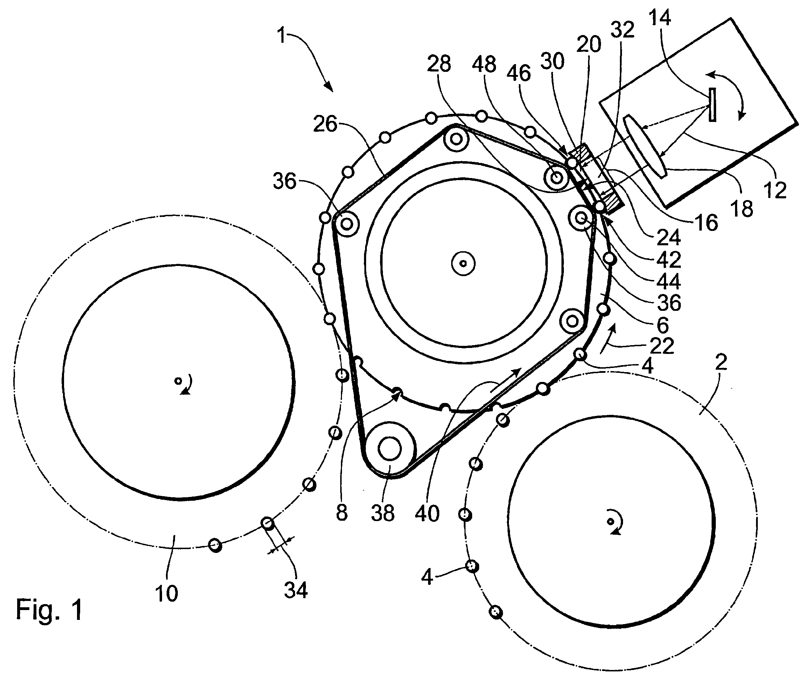

Fig. 1 zeigt eine Perforationsvorrichtung 1, die eine Zufördertrommel 2 zum queraxialen Zufördern von Doppelfilterzigaretten 4, eine als Muldentrommel ausgebildete Fördertrommel 6, die die Doppelfilterzigaretten 4 von der Zufördertrommel 2 in auf ihrem Umfang lateral angeordnete Mulden 8 übernimmt, und eine die während ihres Aufenthaltes auf der Fördertrommel 6 zu perforierenden Doppelfilterzigaretten 4 wiederum von der Fördertrommel 6 übernehmende Abfördertrommel 10 aufweist.

Zur Perforation der Doppelfilterzigaretten 4 ist als energiereiche Strahlung ein gepulster Laserstrahl 12 vorgesehen, welcher von einer nicht dargestellten Laserstrahlquelle erzeugt wird. Der Laserstrahl 12 wird mit Hilfe eines als Nachführmittel dienenden Schnwenkspiegels 14 der Bewegung der Doppelfilterzigaretten 4 im Bereich einer Wirkzone 16 nachgeführt, um innerhalb der Wirkzone 16 mit Hilfe des Laserstrahles 12 die gewünschten Öffnungen in den Umfang der Doppelfilterzigaretten 4 einbringen zu können. Zwischen Schwenkspiegel 14 und der Wirkzone 16 ist eine Optik 18 vorgesehen, um den Laserstrahl 12 zu fokussieren und zu korrigieren, so daß er an jedem Punkt der Wirkzone 16 im wesentlichen senkrecht auf die Umfangsoberfläche der Doppelfilterzigaretten 4 auftrifft.

Die Wirkzone 16 ist innerhalb eines Rollkanals 20 vorgesehen. Der Rollkanal 20 liegt in dem durch den Pfeil 22 angedeuteten Förderweg der Fördertrommel 6. Der Rollkanal 20 wird aus einem eine Rollfläche 24 bildenden Rollband 26 und aus einem zugeordneten, eine Gegenrollfläche 28 bildenden, stationären Rollklotz 30 gebildet. Der Rollklotz 30 weist im Bereich der Wirkzone 16 eine Ausnehmung 32 auf, um den Laserstrahl 12 im Bereich der Wirkzone 16 durch den Rollklotz 30 hindurchführen zu können. Der Abstand der Rollfläche 24 von der Gegenrollfläche 28 ist etwas geringer als der Durchmesser 34 der Doppelfilterzigaretten 4, so daß es im Rollkanal 20 zu einer leichten Pressung der Doppelfilterzigaretten 4 kommt.

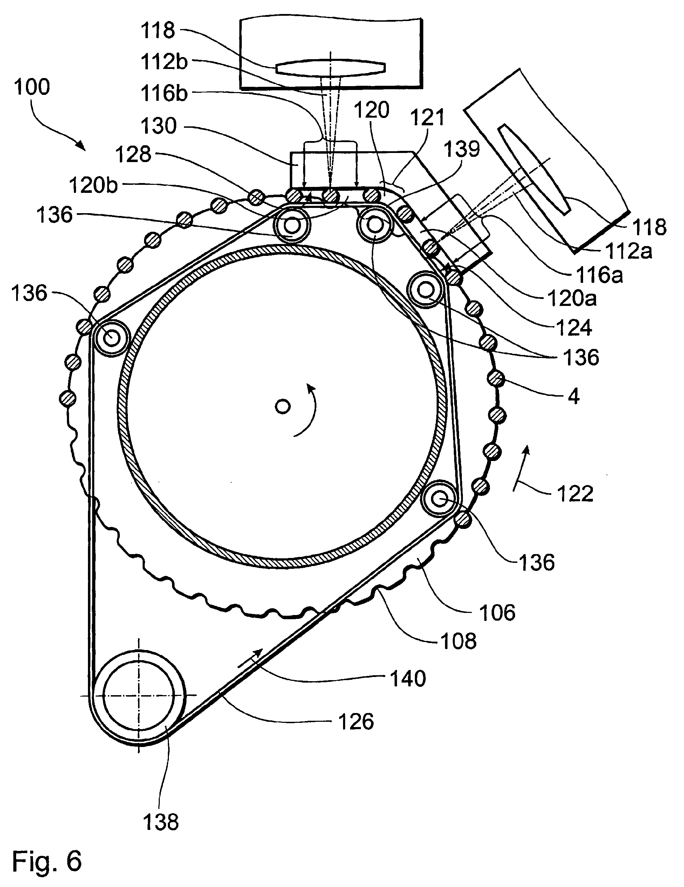

Das Rollband 26 ist teilweise innerhalb der Fördertrommel 6 um zwei Umlenkrollen 36 geführt, die an nicht dargestellten, in ringförmige Nuten der Fördertrommel 6 ragenden stationären Halterungen gelagert sind. Diese sind außerhalb der Fig. 6 im Bereich einer Antriebsrolle 38 am nicht dargestellten Grundgestell der Vorrichtung 1 befestigt. Die Antriebsrolle 38 treibt das Rollband 26 in Richtung des Pfeils 40 an.

Zwei der Umlenkrollen 36 sind der Wirkzone 16 derart zugeordnet, daß der Abstand der Mittelpunkte der entsprechenden Umlenkrollen 36 dem Umfang 34 der Doppelfilterzigaretten 4 entspricht, so daß die Doppelfilterzigaretten 4 innerhalb der Wirkzone 16 einmal abrollbar sind.

Das Rollband 26 ragt im Bereich des Rollkanals 20 in den durch den Pfeil 22 angedeuteten Förderweg der Fördertrommel 6, so daß die Doppelfilterzigaretten 4 von dem Rollband 20 vor Beginn der Wirkzone 16 in einem Eingangsbereich 42 des Rollkanals 20 von der Fördertrommel 6 abgehoben werden. Durch das Anheben der Doppelfilterzigaretten 4wird ein schonender Übergang von derTransportbewegung auf der Fördertrommel 6 in die Rollbewegung in den Rollkanal 20 gewährleistet. Das Rollband 26 läuft mit einer das Doppelte der Umfangsgeschwindigkeit der Fördertromel 6 etwas übersteigenden Fördergeschwindigkeit. Durch die Verdoppelung der Geschwindigkeit wird erreicht, daß die Doppelfilterzigaretten 4 nach der Perforation wieder in dieselbe Mulde 8 auf der Fördertrommel 6 abgesetzt werden. Der die Verdoppelung übersteigende Anteil der Fördergeschwindigkeit gleicht dem durch das Herausheben der Doppelfilterzigaretten 4 etwas verlängerten Weg der Doppelfilterzigaretten 4 auf dem Rollband 26 gegenüber dem Weg der entsprechenden Mulde 8 aus. In einem Eingangsbereich 42 weist die durch den Rollklotz 30 gebildete Gegenrollfläche 28 einen Krümmungsradius auf, der gleich dem Abstand der Gegenrollfläche von dem Mittelpunkt 44 der zugeordneten Umlenkrolle 36 ist. Ebenso ist in einem Ausgangsbereich 46 des Rollkanals 20 die durch den Rollklotz 30 gebildete Gegenrollfläche 28 mit einem Radius gekrümmt, der dem Abstand der Gegenrollfläche 28 von dem Mittelpunkt 48 der zugeordneten Umlenkrolle 36 entspricht.

Im Bereich der Wirkzone 16 ist das Rollband 26 Mittel zum Transportieren und Rollen der Doppelfilterzigaretten 4.

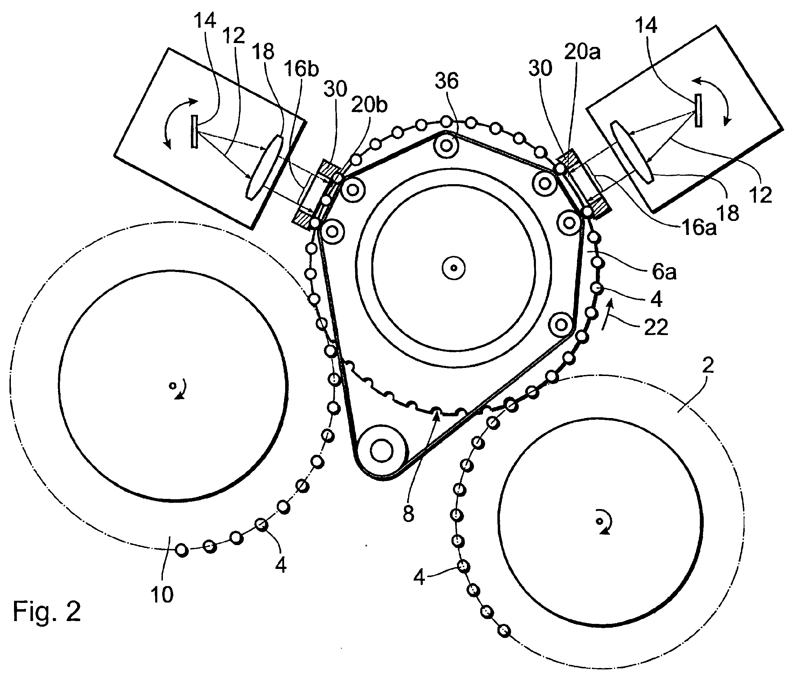

Fig. 2 zeigt eine zweite Ausführungsform einer erfindungsgemäßen Perforationsvorrichtung 1. Teile, die denen der Fig. 1 entsprechen, sind mit den gleichen Bezugszeichen, teilweise zur Unterscheidung mit einem Buchstaben versehen, bezeichnet.

Entgegen der Ausführungsform gemäß Fig. 1 sind bei der Ausführungsform gemäß Fig. 2 zwei Wirkzonen 16a und 1 6b vorgesehen. Beide Wirkzonen befinden sich im Förderweg 22 einer Fördertrommel 6a. Die Fördertrommel 6a weist gegenüber der Fördertrommel 6 gemäß Fig. 1 die halbe Teilung (Abstand der Mulden 8 zueinander) auf. Bei gleichbleibendem Umfang der Doppelfilterzigarette 4 kann daher nur jede zweite Doppelfilterzigarette 4 von dem Laserstrahl 12 während eines Durchlaufes durch die erste Wirkzone 16a perforiert werden. Die jeweils nicht perforierte Doppelfilterzigarette 4 wird dann in der zweiten Wirkzone 16b perforiert. Der Aufbau der Wirkzone 16b bzw. des Rollkanals 20b ist der gleiche wie bezüglich der Ausführungsform gemäß Fig. 1 beschrieben.

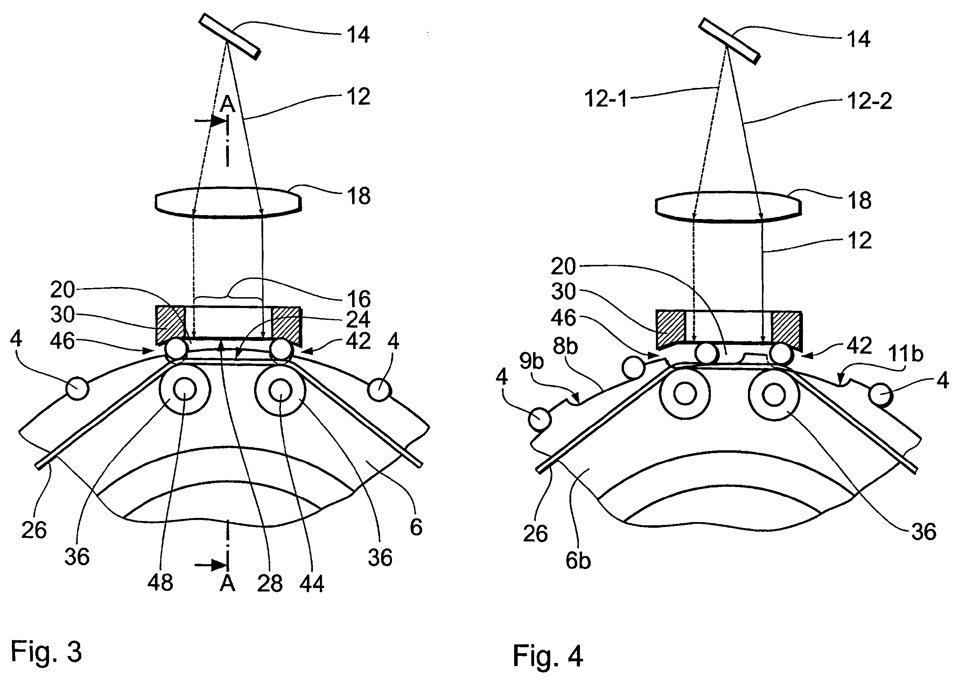

Fig. 3 zeigt eine Vergrößerung des Rollkanals 20 und seiner Umgebung gemäß Fig. 1.

Fig. 4 zeigt den Ausschnitt gemäß Fig. 3 bei einer weiteren Ausführungsform der erfindungsgemäßen Perforationsvorrichtung 1. Teile, die denen gemäß der Ausführungsform aus Fig. 3 entsprechen, sind mit denselben Bezugszeichen bezeichnet. Im Unterschied zu der Ausführungsform gemäß Fig. 3, bei der das Rollband 26 mit der doppelten Fördergeschwindigkeit gegenüber der Umfangsgeschwindigkeit der Fördertrommel 6 läuft, so daß es bei der Ausführungsform gemäß Fig. 3 zu keiner Veränderung des Abstandes der Doppelfilterzigaretten 4 kommt, läuft das Rollband 26 bei der Ausführungsform gemäß Fig. 4 mit weniger als der doppelten Bandgeschwindigkeit gegenüber der Umfangsgeschwindigkeit der Fördertrommel 6b, so daß sich die Doppelfilterzigarette 4 während ihres Aufenthaltes in dem Rollkanal 20 relativ zu der Fördertrommel 6b in entsprechend verlängerten Mulden 8b auf dem Umfang der Fördertrommel 6b zurückbewegt. Dabei ist die Fördergeschwindigkeit des Rollbandes 26 derart gewählt, daß eine am vorderen Ende 9b der Mulden 8b angeförderte Doppelfilterzigarette 4 in dem Auslaßbereich 46 des Rollkanals 20 bei Übergabe von dem Rollband 26 zurück an die Fördertrommel 6b am hinteren Ende 11b der Mulde 8b zu liegen kommt. Mit dieser Ausführungsform wird eine langsamere und schonendere Rollung der Doppelfilterzigaretten 4 realisiert.

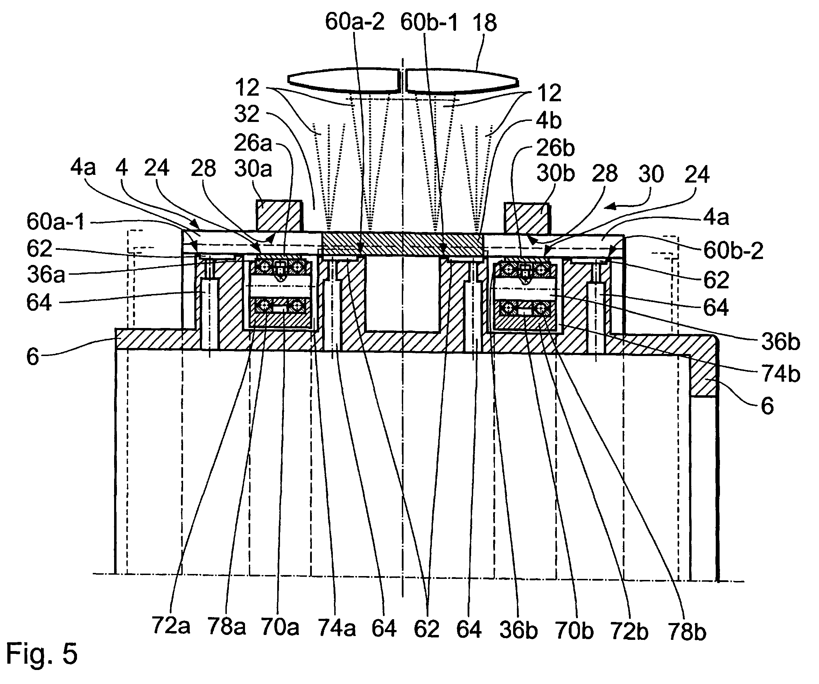

Fig. 5 zeigt einen Schnitt entlang der Linie A-A der Fig. 3. Teile, die denen der Fig. 3 bzw. der Fig. 1 entsprechen sind mit denselben Bezugszeichen bezeichnet. Die Fig. 5 zeigt die aus Tabakabschnitten 4a und aus einem Filterabschnitt 4b bestehende Doppelfilterzigarette 4 (in einer in der Fig. 3 nicht dargestellten Position in der Mitte des Rollkanals 20, um sie im Schnitt A-A darstellen zu können). Die Doppelfilterzigarette 4 wird im Filterbereich 4b von insgesamt vier parallel verlaufenden, zur Verdeutlichung der Wirkung der Optik 18 sich verjüngend dargestellten Laserstrahlen 12 beaufschlagt, so daß die Doppelfilterzigarette 4 im Filterbereich 4b an mehreren Stellen gleichzeitig perforiert wird.

Die Doppelfilterzigarette 4 ist zwischen den die Gegenrollfläche bildenden Oberflächen 28 der Rollklotzteile 30a und 30b des Rollklotzes 30 und den die Rollfläche bildenden Oberflächen 24 der Rollbandteile 26a und 26b des Rollbandes 26 unter leichter Pressung in dem Rollkanal 20 (siehe Fig. 3) geführt. Zwischen den Teilen 30a und 30b des Rollklotzes 30 befindet sich die Ausnehmung 32, um dem Laserstrahl 12 freien Zugang zu dem Filterbereich 4b der Doppelfilterzigarette 4 zu geben.

Die jeweils über Umlenkrollen 36a und 36b laufenden Rollbandteile 26a und 26b heben die Doppelfilterzigarette 4 dabei leicht von den jeweils links und rechts von den Rollbändern 26a bzw. 26b liegenden Oberflächen 60a-1 und 60a-2 bzw. 60b-1 und 60b-2 der Mulden 8 in der Fördertrommel 6 ab. Die Umlenkrollen 36a bzw. 36b sind in U-förmigen Ausnehmungen 70a bzw. 70b von stationären Haltern 72a bzw. 72b befestigt. Die stationären Halter 72a bzw. 72b ragen sichelartig in U-förmige Nuten 74a bzw. 74b in der Umfangsoberfläche 60 der Fördertrommel 6 hinein. Die äußeren Ringe der Kugellager 78a bzw. 78b bilden die Umlenkrollen 36a bzw. 36b und somit die Abrollflächen für die Rollbandteile 26a bzw. 26b.

Um die Doppelfilterzigarette 4 vor dem Rollkanal 20 und nach dem Verlassen des Rollkanals 20 in den Mulden 8 der Fördertrommel 6 halten zu können, weisen die Oberflächen 60a-1, 60a-2, 60b-1 und 60b-2 der Mulden 8 Öffnungen 62 auf, die über Saugkanäle 64 mit Unterdruck beaufschlagt werden.

Fig. 6 zeigt eine vierte Ausführungsform 100 einer Perforationsvorrichtung gemäß der Erfindung. Teile, die denen der Figur 2 entsprechen, sind mit den gleichen, jedoch um 100 erhöhten Bezugszeichen bezeichnet. Auf eine erneute Erläuterung dieser Teile wird daher verzichtet.

Entgegen den vorhergehenden Ausführungsformen weist die Ausführungsform 100 zwar auch zwei Wirkzonen 116a und 116b jedoch nur einen Rollkanal 120 auf, der zwei in einem Winkel von etwa 30 Grad zueinander angeordnete Abschnitte 120a und 120b aufweist. In dem Abschnitt 120a liegt die Wirkzone 116a, während in dem in Förderrichtung 122 hinter dem Abschnitt 120a vorgesehenen Abschnitt 120b des Rollkanals 120 die Wirkzone 116b liegt.

Die Winkelstellung der Abschnitte 120a und 120b zueinander wird erreicht, indem das Rollband 126 im Bereich eines Übergangs 121 zwischen dem ersten Abschnitt 120a und dem zweiten Abschnitt 120b über eine über den Außenumfang der Fördertrommel 106 hinausragende zusätzliche mittlere Umlenkrolle 136 geführt ist. Diese mittlere Umlenkrolle 136 markiert somit das Ende des Abschnittes 120a, dessen Anfang durch die stromaufwärts am Beginn des Rollkanals 120 liegende Umlenkrolle 136 definiert wird. Gleichzeitig bildet die mittlere Umlenkrolle 136 den Anfang des Abschnittes 120b, dessen Ende wiederum von einer stromabwärts am Ende des Rollkanals 120 liegenden Umlenkrolle 136 definiert ist. Durch die mittlere Umlenkrolle 136 wird eine Krümmung 139 in dem Rollband 126 definiert. Ein eine Gegenrollfläche 128 bildender Rollklotz 130 weist im Bereich des Übergangs 121 eine parallel ausgebildete Krümmung auf, so daß die durch das Rollband 26 gebildete Rollfläche 124 und die durch den Rollklotz 130 gebildete Gegenrollfläche 128 in allen Abschnitten 120a, 121 und 120b des Rollkanals 120 gleich beabstandet und parallel zueinander verlaufen. Entgegen den anderen Ausführungsformen liegen die den Beginn bzw. das Ende des Rollkanals markierenden Umlenkrollen 136 direkt dem Anfang bzw. Ende des Rollklotzes 120 gegenüber, so daß keine gekrümmten Eingangs- bzw. Ausgangs-Bereiche am Rollklotz 120 notwendig sind.

Auch hier wird der - durch die über den Außenumfang der Fördertrommel 106 hinausragende Krümmung 139 in dem Rollband 126 zusätzlich - verlängerte Förderweg der Doppelfilterzigaretten 4 im Bereich des Rollkanals 120 durch eine das Doppelte der Umfangsgeschwindigkeit der Fördertrommel 106 übersteigende Fördergeschwindigkeit des Rollbandes 126 ausgeglichen, so daß die Doppelfilterzigaretten 4 am Ende des Rollkanals 120 wieder in derselben Mulde 108 landen, aus der sie am Anfang des Rollkanals 120 entnommen wurden. Der Vorteil dieser Ausführungsform liegt gegenüber der der Fig. 2 darin, daß die Doppelfilterzigaretten 4 nur einmal aus den Mulden 108 gehoben bzw. in diese eingesetzt werden müssen. Dies schont die Doppelfilterzigaretten 4.

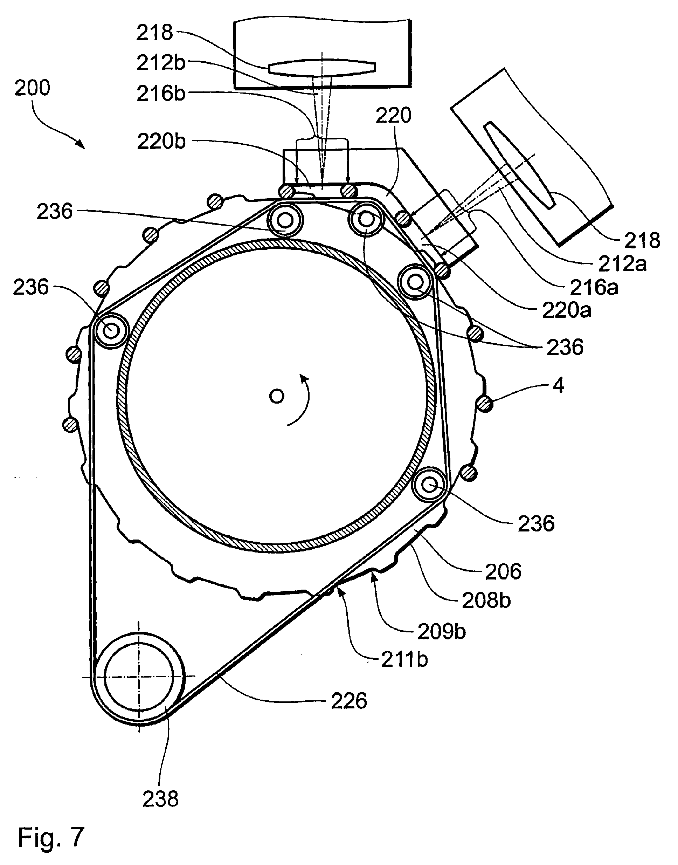

Figur 7 zeigt eine fünfte Ausführungsform 200 der erfindungsgemäßen Perforationsvorrichtung. Teile, die denen der Figur 4 (bzgl. der Mulden 8b) bzw. der Figur 6 entsprechen, sind mit den gleichen, jedoch um 100 erhöhten Bezugszeichen bezeichnet. Auf eine erneute Erläuterung dieser Teile wird daher verzichtet.

Die Vorteile der Ausführungsform 200 liegen darin, daß bei Doppelfilterzigaretten 4, bei denen zwei Perforationsspuren parallel zueinander in dem Umfang der Doppelfilterzigaretten 4 eingebracht werden, mit Hilfe des ersten Laserstrahles 212a eine erste Reihe von Perforationsöffnungen in den Umfang der Doppelfilterzigaretten 4 eingebracht werden kann, während mit Hilfe des zweiten, unabhängig von dem ersten Laser 212a arbeitenden Lasers 212b eine zweite Reihe parallel, aber versetzt zu der ersten Reihe in den Umfang der Doppelfilterzigaretten 4 eingebracht werden kann.

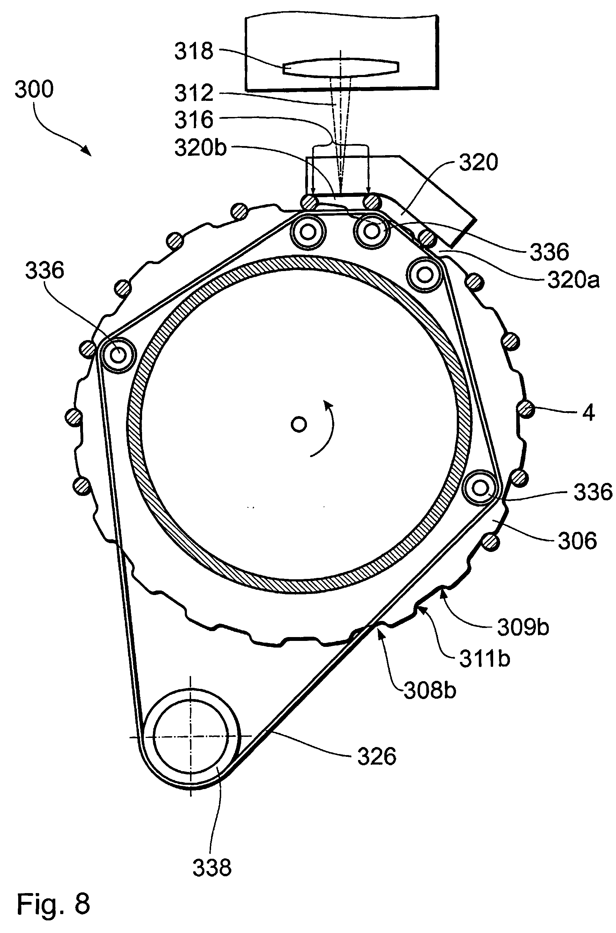

Figur 8 zeigt eine sechste Ausführungsform 300 der Perforationsvorrichtung der Erfindung. Teile, die denen der Figur 4 (bzgl. der Mulden 8b) bzw. der Figur 7 entsprechen, sind mit den gleichen, jedoch um 100 erhöhten Bezugszeichen bezeichnet. Auf eine erneute Beschreibung wird daher verzichtet.

Entgegen der Ausführungsform 200 der Figur 7 ist bei der Ausführungsform gemäß Figur 8 nur eine Wirkzone 316 vorgesehen. Entsprechend ist auch nur ein Laser 312 vorgesehen. Der Rollkanal 320 ist jedoch kürzer ausgeführt, so daß er sich nur über den 2 1/2-fachen Abstand der Doppelfilterzigaretten 4 auf der Fördertrommel 206 erstreckt. Dies ist möglich, da ein erster Abschnitt 320a nicht für die Perforation sondern nur zum Anrollen der Doppelfilterzigaretten 4 verwendet wird. Die eigentliche Perforation findet nur in der in dem Abschnitt 320b vorgesehenen Wirkzone 316 des Rollkanals 320 statt. Es ist somit ein noch schonenderes Anrollen der Doppelfilterzigareten 4 möglich. Die mittlere Umlenkrolle 136 ragt nur gering über die Außenoberfläche der Fördertrommel 206 hinaus.

## Patentansprüche

1. Perforationsvorrichtung zum Herstellen von Öffnungen in einer Umfangsoberfläche eines im wesentlichen länglichen, zylinderförmigen Gegenstandes, insbesondere einer Zigarette (4),
mit einer Strahlungsquelle zum Erzeugen energiereicher Strahlung (12), mit deren Hilfe die Öffnungen in den Gegenstand (4) einbringbar sind,
mit einer Wirkzone (16), innerhalb derer die Strahlung (12) zum Einbringen der Öffnungen auf einen sich durch die Wirkzone (16) bewegenden Gegenstand (4) einwirkt,
mit einem Rollkanal (20) zum Erzeugen einer Eigenrotationsbewegung des Gegenstandes (4) um seine Längsachse während der Gegenstand (4) sich durch die Wirkzone (16) bewegt, um die Umfangsoberfläche des Gegenstandes (4) der Strahlung (12) auszusetzen,
mit Transportmitteln (26) zum Befördern des Gegenstandes (4) durch die Wirkzone (16),
**dadurch gekennzeichnet, daß** der Rollkanal (20) aus einem eine Rollfläche (24) bildenden Rollband (26) und einem zugeordneten, eine Gegenrollfläche (28) bildenden, stationären Rollklotz (30) gebildet ist, wobei das Rollband (26) zumindest teilweise innerhalb einer den Gegenstand (4) an den Rollkanal (20) an- und von diesem abfördernden Fördertrommel (6) geführt ist, um den Gegenstand (4) von dieser zu übernehmen.

2. Vorrichtung nach Anspruch 1,
wobei das Rollband (26) um mindestens 2n innerhalb der Fördertrommel (6, 6a, 6b) stationär, bevorzugt in Nuten der Fördertrommel (6, 6a, 6b), gelagerte Umlenkrollen (36) geführt ist, wobei n gleich der Anzahl der Wirkzonen (16, 16a, 16b) ist.

3. Vorrichtung nach einem der vorstehenden Ansprüche,
wobei der Abstand der Mittelpunkte (44, 48) von paarweise einer Wirkzone (16) zugeordneten Umlenkrollen (36) mindestens dem Umfang (34) des Gegenstandes (4) entspricht, so daß der Gegenstand (4) innerhalb der Wirkzone (16) mindestens einmal abrollbar ist.

4. Vorrichtung nach einem der vorstehenden Ansprüche, wobei das Rollband (26) im Bereich des Rollkanals (20) in den Förderweg (22) der Fördertrommel (6) ragt, so daß der Gegenstand (4) von dem Rollband (26) vor Beginn der Wirkzone (16) von der Fördertrommel (6) abgehoben wird.

5. Vorrichtung nach einem der vorstehenden Ansprüche, wobei zwei durch das Rollband (26) und zwei Rollklötze (30) gebildete Rollkanäle (20a, 20b) mit entsprechenden Wirkzonen (16a, 16b) in Förderrichtung (22) der Fördertrommel (6a) hintereinander der Fördertrommel (6a) zugeordnet sind, und daß benachbarte Gegenstände (4) in verschiedenen Wirkzonen (16a, 16b) perforierbar sind.

6. Vorrichtung nach einem der vorstehenden Ansprüche, wobei der Rollkanal (120, 220, 320) mindestens zwei in einem Winkel zueinander angeordnete Abschnitte (120a, 120b; 220a, 220b; 320a, 320b) aufweist.

7. Vorrichtung nach Anspruch 6, wobei das Rollband (126, 226, 326) am Übergang von einem Abschnitt (120a, 120b; 220a, 220b; 320a, 320b) zu einem benachbarten Abschnitt (120a, 120b; 220a, 220b; 320a, 320b) eine Krümmung (139) bildend über eine zusätzliche Umlenkrolle (136, 236, 336) geführt ist.

8. Vorrichtung nach Anspruch 7, wobei die der zusätzlichen Umlenkrolle (136, 236, 336) gegenüberliegende Gegenrollfläche parallel zu der Krümmung des Rollbandes verläuft.

9. Vorrichtung nach einem der Ansprüche 6 bis 8,
wobei mindestens einer der Abschnitte (120a, 120b; 220a, 220b; 320a, 320b) nicht im Bereich einer Wirkzone (116a, 116b; 216a, 216b; 316) liegt.

10. Vorrichtung nach einem der Ansprüche 6 bis 9,
wobei der Winkel etwa 30 Grad beträgt.

11. Vorrichtung nach einem der vorstehenden Ansprüche,
wobei das Rollband (26) innerhalb der Wirkzone (16) als Transportmittel für den Gegenstand (4) dient.

12. Vorrichtung nach einem der vorstehenden Ansprüche,
wobei der Rollklotz (30) im Bereich der Wirkzone (16) Ausnehmungen aufweist, durch die hindurch die Strahlung (12) geführt ist.

13. Vorrichtung nach einem der vorstehenden Ansprüche,
wobei der Rollkanal (20) im Bereich der Wirkzone (16) linear ist.

14. Vorrichtung nach einem der vorstehenden Ansprüche,
wobei die Gegenrollfläche (28) in einem Einlaufbereich (42) des Gegenstandes (4) in den Rollkanal (20) und/oder in einem Auslaufbereich (46) des Gegenstandes (4) aus dem Rollkanal (20) gekrümmt ist.

15. Vorrichtung nach Anspruch 14,
wobei der Radius der Krümmung der jeweiligen Gegenrollfläche (28) gleich dem Abstand der Gegenrollfläche (28) zu dem Mittelpunkt (44, 48) der zugeordneten Umlenkrolle (36) ist.
